# EUROPEAN PATENT SPECIFICATION

(11) **EP 1 216 814 B1**
(45) Date of publication and mention of the grant of the patent: **22.03.2006**
(21) Application number: 00830844.7
(22) Date of filing: 22.12.2000
(51) Int. Cl.: B29D 30/20

(54) **Method and apparatus for the manufacturing of a tyre for vehicle wheels**
Verfahren und Vorrichtung zur Herstellung von Luftreifen für Fahrzeugräder
Procédé et appareil pour la fabrication de pneumatiques pour roues de véhicules

(43) Date of publication of application: 26.06.2002
(73) Proprietor: PIRELLI PNEUMATICI Società per Azioni, 20126 Milano (IT)
(72) Inventor: Lacagnina, Claudio, 21052 Busto Arsizio (Varese) (IT); Bosio, Gian Luigi, 26010 Bagnolo Cremasco (Cremona) (IT)
(74) Representative: Tansini, Elio Fabrizio

(56) References cited:
- EP-A- 0 676 277
- EP-A- 0 997 263

## Description

The present invention relates to a method of manufacturing a tyre for vehicle wheels, of the type comprising the features recited in the preamble of claim 1.

The invention also relates to an apparatus for manufacturing a tyre for vehicle wheels comprising the features recited in the preamble of claim 12.

A tyre for vehicle wheels generally comprises a carcass structure having at least one carcass ply provided with respectively opposite end flaps each turned up in the form of a loop around annular reinforcing structures, each of which is usually made up of a circumferentially inextensible annular insert to which at least one filling insert is applied at a radially outer position thereof.

Associated with the carcass structure is a belting structure comprising one or more textile belt layers disposed in radial superposed relationship with respect to each other and to the carcass ply and provided with textile or metallic reinforcing cords of a respectively crossed orientation or substantially parallel to the circumferential extension direction of the tyre. Applied to the belting structure, at a radially outer position thereof, is a tread band also made of elastomer material like other semifinished constituent parts of the tyre.

It is to be pointed out that, to the aims of the present invention, by the term "elastomer material" it is intended a rubber blend in its entirety, that is the assembly made up of a base polymer suitably amalgamated with reinforcing fillers and/or process additives of various types.

Also applied to the side surfaces of the carcass structure, each extending from one of the side edges of the tread band until close to the respective annular reinforcing structure at the beads, are respective sidewalls of elastomer material that, depending on the different embodiments, can have respective radially-external end edges either superposed on the side edges of the tread band to form a construction pattern of the type usually referred to as "overlying sidewalls" or interposed between the carcass structure and the side edges of the tread band, according to a construction pattern of the type referred to as "underlying sidewalls".

In most of the known processes for tyre building the carcass structure and the belting structure, together with the respective tread band, are provided to be made separately from each other at respective work stations, to be subsequently mutually assembled.

More particularly, accomplishment of the carcass structure first involves that the carcass ply or plies should be laid down on a first drum, usually identified as "building drum", to form a cylindrical sleeve. The annular reinforcing structures at the beads are fitted or formed on the opposite end flaps of the carcass ply or plies, that are then turned up around the annular structures so as to enclose them as in a loop.

Simultaneously, on a second or auxiliary drum an outer sleeve is buildingd which is made up of the belt layers laid down in radially superposed relationship with respect to each other and to the tread band applied to the belt layers at a radially outer position. The outer sleeve is then picked up from the auxiliary drum to be transferred onto the carcass sleeve for the purpose of carrying out coupling therewith.

Assembling between the carcass sleeve and outer sleeve can be executed on the same drum used for making the carcass sleeve, in which case the concerned process is identified as "one-step manufacturing process". Alternatively, assembling can be executed on a so-called shaping drum onto which the carcass sleeve and outer sleeve are transferred, to carry out tyre building following a so-called "two-step manufacturing process".

In the one-step process, application of the sidewalls takes place with the aid of the same building drum as used for formation of the carcass sleeve. The process varies depending on whether the sidewalls are first laid down on the drum or they are directly laid down on the carcass sleeve after the end flaps thereof have been turned up around the annular reinforcing structures. In the last mentioned case, in order to obtain a construction pattern of the "underlying sidewall" type, each sidewall is provided to be made by laying down a strip of elastomer material on the carcass sleeve disposed in a cylindrical conformation on the drum, taking good care that the axially outer edge of the elastomer material strip should be positioned in superposed relationship with the end flap of the carcass ply already turned up around the annular reinforcing structure. The width of the elastomer material strips is such selected that the outer end flaps of the sidewalls lend themselves to be covered with the side edges of the tread band when, concurrently with an axial approaching movement of the two halves forming the drum and retaining the respective annular reinforcing structures of the carcass sleeve, said carcass sleeve is shaped into a toroidal configuration for matching with the inner surface of the outer sleeve previously placed at a centred position on the drum.

On the contrary, in order to obtain a construction pattern of the "overlying sidewall" type, it is preferable for the strips of elastomer material designed to make the sidewalls to be laid down on the building drum at an axially outer position with respect to the annular reinforcing structures.

The sidewall strips can be paired with the end flaps of the carcass ply so as to be turned up together with the latter, or they may stay separated from said flaps in order to enable turning up of the end flaps around the annular reinforcing structures at the beads separately from turning-up of the sidewalls, generally before shaping the carcass sleeve into a toroidal conformation.

At all events, after the carcass structure has been shaped into a toroidal configuration and matched with the outer sleeve, appropriate expandible portions of the building drum, consisting of a system of levers or of inflatable bags for example, cause overturning of the strips of elastomer material in order to apply them against the side surfaces of the carcass structure.

Methods and apparatuses operating in accordance with the above-mentioned principles are described in documents FR-A-2.093.180 and US 3,990,931, for example.

Referring now to the two-step manufacturing processes, the construction pattern of the "underlying sidewall" type is obtained by laying down the elastomer material strips on the carcass sleeve in the same manner as above described with reference to the one-step manufacturing process.

In fact, the sidewalls are arranged on the carcass sleeve formed into a cylindrical conformation on the building drum, which in this case can be also called "first-step drum", to join the respective end flaps to the side edges of the tread band, concurrently with the step of shaping the carcass sleeve on the shaping drum, also referred to as "second-step drum".

The construction pattern of the "overlying sidewall" type can be obtained by applying the elastomer material strips designed to form the sidewalls directly on the carcass sleeve, as provided for the above-described corresponding pattern of the "underlying sidewall" type, while at the same type adopting particular expedients, such as use of strips of adhesion-preventing material for example, in order to make the elastomer strips fixedly adhere to the carcass ply only and exclusively close to the annular reinforcing structures.

After the carcass sleeve has been transferred to the shaping drum, each of the elastomer material strips is, by a manual action and/or with the aid of appropriate devices, radially and axially spread apart outwardly with respect to the sleeve, to enable removal of the adhesion -preventing films. Then shaping of the carcass into a toroidal conformation is carried out in order to match it with the outer sleeve previously placed at a centred position on the carcass sleeve itself. Subsequently, the spread-apart sidewalls are overturned with the aid of rolling devices or devices of other types, to be applied against the side surfaces of the carcass structure and the tread band.

In document EP-A-822059 an apparatus and a method are disclosed which enable the above described operations to be carried out without requiring application of adhesion-preventing films.

In document US 5,380,384 the shaping step for application of the outer sleeve to the carcass sleeve is provided to be carried out on the first-step drum whereas the second-step drum is exclusively intended for carrying out all operations aiming at applying the sidewalls, in accordance with the construction pattern of the "overlying sidewall" type.

In an attempt to optimize distribution of the floor to floor times between the first and second steps in a two-step manufacturing process, in document EP 997.263 a proposal has been made to carry out application of the outer sleeve and subsequent application of the sidewalls completely on the shaping drum. Document EP 0 676 277 forms a carcass sleeve, by assembling a carcass band with an inner liner and bead cores on a first band forming drum. In the meantime, a second assembly consisting of sidewalls, metal chafer etc. is formed on a second band forming drum, and then assembled with the first assembly to form a third assembly. A shaping drum is then inserted within the third assembly, and the carcass sleeve is shaped in a toroidal form to be coupled with a cylindrical belt-tread assembly positioned around the shaping drum. The sidewalls together with end flaps of the carcass ply are then turned up around the bead cores.

In accordance with the present invention, it has been found that by carrying out the processing steps aiming at applying the sidewalls on two separate drums, subsequently to the working operations on the building drum, optimisation of the floor to floor times can be further improved while at the same time surprising economical advantages are achieved, as a result of simplification of the machinery and the operating flexibility of same in connection with building of tyres of different typologies and/or sizes.

In more detail, the invention relates to a method of manufacturing a tyre for vehicle wheels, comprizing the features recited ikn the characterizing portion of claim 1.

More specifically, positioning of each sidewall comprises the step of winding up a strip of elastomer material around a first radially expandible portion of the intermediate drum.

Following said transferring step, the carcass sleeve is advantageously coaxially positioned around the intermediate drum with the annular reinforcing structures at the beads that are each disposed close to the inner end flap of one of said sidewalls.

The engagement step of the inner end flap of each sidewall is preferably carried out by radial expansion of the sidewalls placed on the intermediate drum.

It may be also advantageously provided that following radial expansion of the sidewalls, an end section of the inner end flap of each sidewall will be submitted to an additional radial expansion step and applied against an axially inner shoulder defined by the respective annular reinforcing portion at the bead.

In a preferential embodiment of the subject method, before or during radial expansion of the sidewalls, an axial tensioning step of the carcass sleeve is provided to be carried out.

In more detail, axial tensioning of the carcass sleeve is preferably accomplished by bringing pusher elements in thrust relationship with axially inner shoulders defined by the annular reinforcing portions at the beads.

Furthermore, the pusher elements are preferably caused to be axially moved apart from said axially inner shoulders before carrying out the additional radial expansion of said end sections.

In a first embodiment, said additional radial expansion is carried out as a continuation of the radial expansion of the sidewalls: alternatively, said additional radial expansion is carried out after completion of the tyre by shaping of the carcass and application of the outer sleeve and the sidewalls, both in the overlying sidewall pattern and in the underlying sidewall pattern, as above described.

This second embodiment offers a high degree of security in maintaining the carcass centring during the operations for tyre completion and facilitates subsequent moving away of the pusher elements, that are no longer constrained by the belting action exerted by the cylindrical carcass sleeve.

In a preferential embodiment the following steps are also provided: forming an outer sleeve comprising the belting structure and the tread band applied to the belting structure at a radially outer position thereof; placing the outer sleeve at a centred position around the carcass sleeve previously transferred onto the shaping drum, before terminating the shaping step.

According to a possible alternative embodiment, application of the sidewalls against the side surfaces of the carcass sleeve can be carried out before completing the shaping step.

It is a further object of the present invention to provide an apparatus for manufacturing tyres for vehicle wheels, characterized in that it further comprises the features recited in the characterizing portion of claim 12.

Preferably, said engagement devices comprise first radially expandible portions of the intermediate drum.

Advantageously, these first radially expandible portions define respective rest seatings for the sidewalls positioned on the intermediate drum.

It is further preferably provided that said engagement devices should comprise auxiliary expandible portions located at axially inner positions with respect to the first radially expandible portions and movable between a rest condition in which they are substantially in radial alignment with the first expandible portions themselves, and an operating condition in which they radially project from the first radially expandible portions.

Each of said auxiliary radially expandible portions advantageously offers a rest seating for the inner end flap of one of said sidewalls.

It is also provided that in the operating condition, each of said auxiliary radially expandible portions should have one axially outer surface thereof in abutment relationship with an axially inner shoulder defined by one of said annular reinforcing portions at the bead, to apply the inner end flap of the respective sidewall against the shoulder itself.

Preferably, the intermediate drum further comprises pusher elements axially movable between a rest position which is axially internal with respect to the inner end flaps of the sidewalls disposed on the intermediate drum, and an operating position in which said pusher elements are radially superposed with respect to the inner end flaps of the sidewalls.

In more detail, said pusher elements in the operating position act against axially inner shoulders defined by said annular reinforcing portions at the bead, to give rise to an axial tensioning of the carcass sleeve engaged on the intermediate drum.

In a preferential embodiment, said applicator devices comprise radially expandible diaphragm elements arranged to supply rest seatings for the sidewalls carried by the carcass sleeve transferred to the shaping drum.

It is also preferably provided that said transfer devices should comprise a first transferring member to move the carcass sleeve from the building drum to the intermediate drum and a second transferring member to move the carcass sleeve together with the sidewalls associated therewith from the intermediate drum to the shaping drum.

Further features and advantages will become more apparent from the detailed description of a preferred but not exclusive embodiment of a method and an apparatus for manufacturing a tyre for vehicle wheels in accordance with the present invention. This description will be set forth hereinafter with reference to the accompanying drawings in which:
- Fig. 1 is a diagrammatic plan view of an apparatus for manufacturing tyres in accordance with the present invention;
- Fig. 2 is a partial half-section diagrammatically showing an intermediate drum used for manufacturing tyres in accordance with the invention, during an operating step in which it is about to receive in engagement a carcass sleeve previously formed on a building drum;
- Fig. 3 shows the intermediate drum of Fig. 2 during a subsequent operating step in which the carcass sleeve is submitted to axial tensioning;
- Fig. 4 shows the intermediate drum during an operating step in which, upon the action of first radially expandible portions thereof, engagement of the carcass sleeve and the sidewalls is obtained at annular reinforcing structures at the beads;
- Fig. 5 shows the intermediate drum during an operating step in which, upon the action of auxiliary expandible portions, application of the inner end flaps of the sidewalls against inner shoulders of the annular reinforcing structures at the beads is accomplished;
- Fig. 6 is a diametrical half-section diagrammatically showing an operating step in which the carcass sleeve together with the sidewalls is about to be engaged on a shaping drum;
- Fig. 7 shows the shaping drum during an operating step in which engagement of the carcass sleeve takes place, following radial expansion of primary and auxiliary grasping portions;
- Fig. 8 shows the shaping drum during an operating step in which, following mutual axial approaching of the halves forming it, concurrently with inflation of the carcass sleeve and of diaphragm elements associated with the drum itself, coupling between said drum and an outer sleeve previously placed at a centred position is achieved;
- Fig. 9 shows the shaping drum during an operating step in which the sidewalls are applied against the side portions of the carcass sleeve.

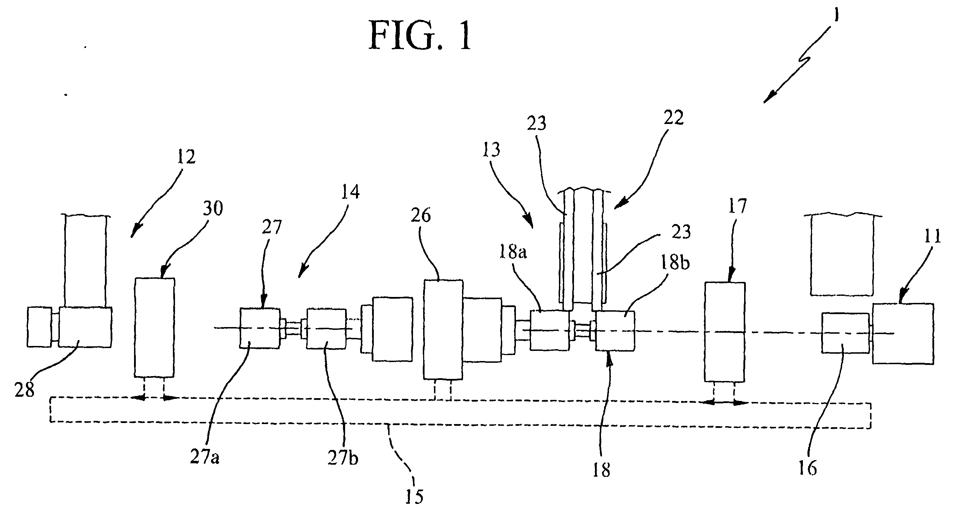

Referring particularly to Fig. 1, an apparatus for manufacturing tyres for vehicle wheels in accordance with the present invention has been generally identified by reference numeral 1.

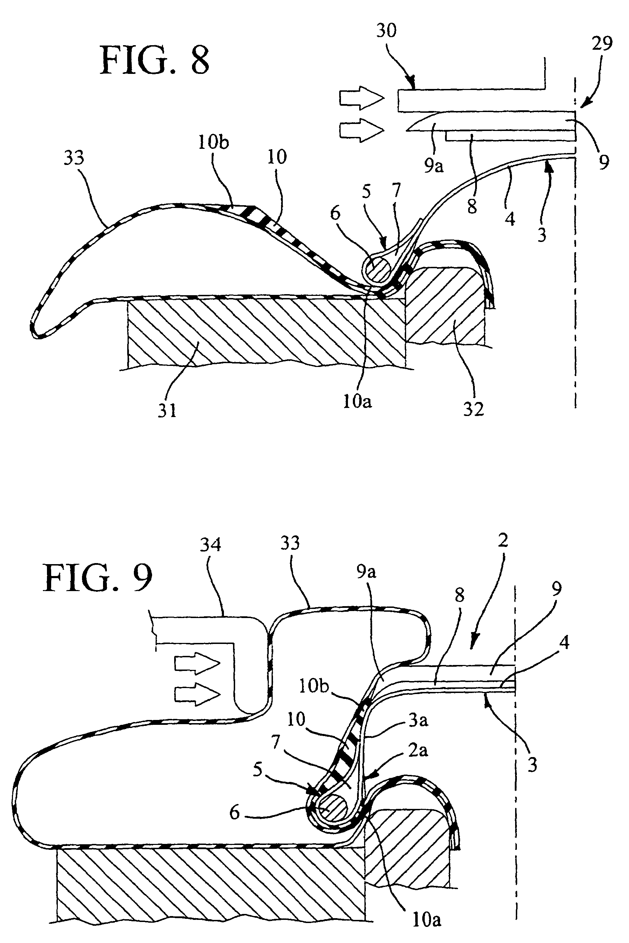

Apparatus 1 is arranged to make tyres, one of which is diagrammatically shown in Fig. 9 and identified by 2, essentially comprising a carcass structure 3 having at least one carcass ply 4 provided with axially opposite circumferential flaps 4a turned up at respective annular reinforcing structures 5 that, in the finished tyre, are incorporated into the tyre regions usually identified as "beads" 2a, localized along the inner circumferential edges of the tyre itself.

In the embodiment shown, each annular reinforcing structure 5 comprises a circumferentially inextensible annular insert 6, usually called "bead ring" and an elastomeric filler 7 applied to the bead ring itself at a radially outer position. Obviously the possibility of providing annular reinforcing structures 5 different in construction from the above-described one is not excluded.

Associated with the carcass structure 3, at a radially outer position, is a belting structure 8 usually comprising one or more belt layers. Applied to the belting structure 8, at a radially outer position thereof, is a tread band 9 intended to provide the ground-contact surface of tyre 2.

Respective sidewalls 10 of elastomer material are applied to the side surfaces 3a of the carcass structure 3, each of which radially extends from one of the side edges 9a of the tread band 9 until close to the region of the annular reinforcing structure 5; each of said sidewalls 10 conveniently has an inner end flap 10a axially turned up, from outside to inside, around the respective annular reinforcing structure 5, and an outer end flap 10b laterally superposed on the corresponding side edge 3a of the tread band 9. The inner 10a and outer 10b end flaps can belong to respective portions of the sidewall made of different elastomer materials, i.e. an inner portion made of a relatively hard wear-resistant blend for protecting the bead from rubbing against the rim surfaces during use of the tyre, and an outer portion made of a low-hysteresis natural rubber blend for example, in order not to cause overheating due to deformations that cyclically occur at the ground-contacting area of the tyre during running.

As diagrammatically shown in Fig. 1, the apparatus comprises a first work station 11 at which the carcass structure 3 is built and a second work station 12 intended for accomplishment of the belting structure 8 with the tread band 9 applied thereto. Also provided is a third work station 13 where, as better clarified in the following, initial engagement of the sidewalls 10 with the carcass structure 3 is carried out, as well as a fourth work station 14 wherein coupling between the carcass structure 3 and the belting structure 8 and final application of the sidewalls 10 against the side walls of the carcass structure 3 occur. One or more transfer lines 15 or equivalent devices carry out transfer of the carcass structure 3 from the first work station 11 to the third work station 13, and from the latter to the fourth work station 14.

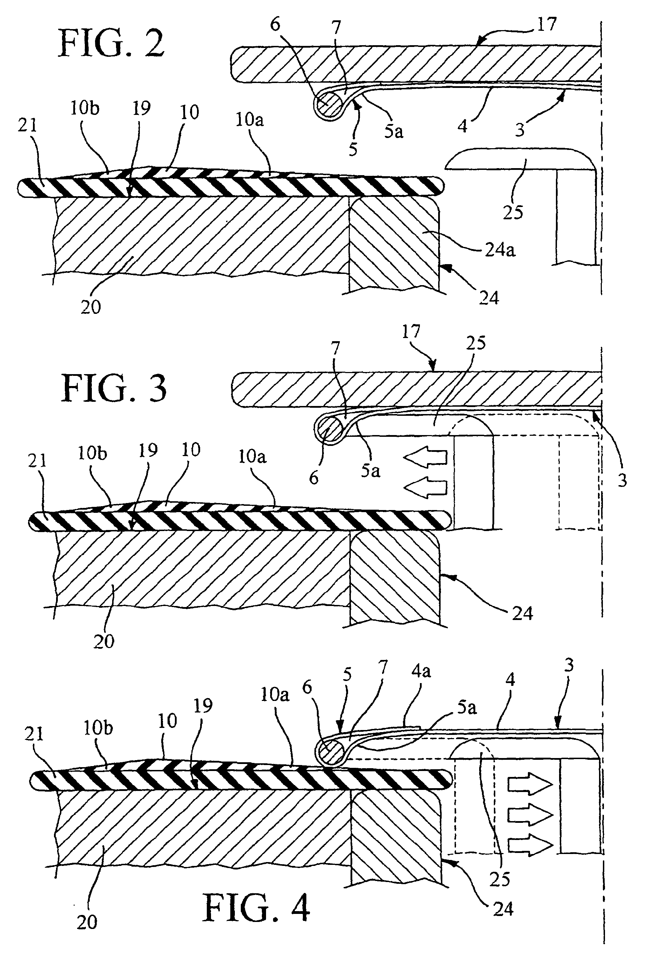

Accomplishment of the carcass structure 3 is performed on a cylindrical building drum 16 (Fig. 1), also referred to as first-step drum, in any convenient manner for a person skilled in the art, for instance through winding of the carcass ply or plies 4 around the drum itself, axial fitting of the annular reinforcing structures 5 around the opposite circumferential flaps 4a of the carcass ply or plies 4, and turning up of the circumferential flaps 4a around the annular reinforcing structures 5. At the end of the operations accomplished on the building drum 6, the carcass structure 3 is obtained, the latter being in the form of a cylindrical sleeve, usually called "carcass sleeve", which at the turned-up circumferential flaps 4a is provided with the annular reinforcing structures 5 radially projecting towards the geometric axis of the sleeve itself, as shown in Fig. 2 for example.

Upon the action of a first transferring member 17, the carcass sleeve 3 is then removed from the building drum 16, upon radial shrinkage of the latter, to be transferred to the third work station 13 where it is fitted on an intermediate drum 18 better shown in Figs. 2 to 5.

Associated with the intermediate drum 18 are engagement devices to produce engagement of the inner end flap 10a of each sidewall 10 against the carcass sleeve 3. In more detail, as viewed from Fig. 1, the intermediate drum 18 is made up of two halves 18a, 18b which are coaxially aligned and integral with each other for rotation, and which incorporate first radially expandible portions 19 arranged to engage the carcass sleeve 3 at the annular reinforcing structures at the beads 5.

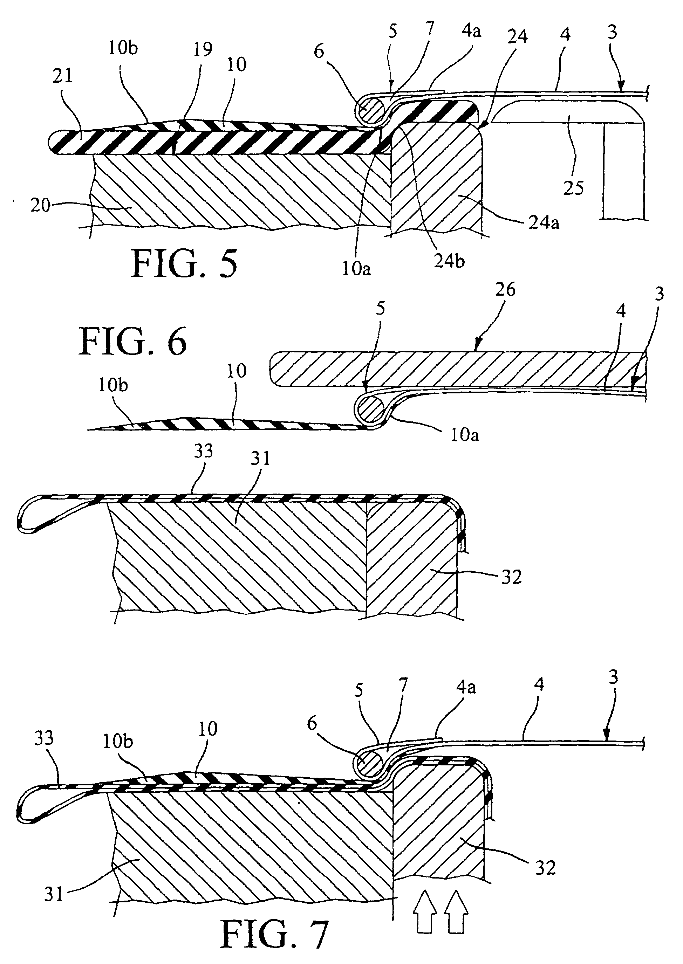

Each of the first radially expandible portions 19 can be defined for example by a plurality of sectors 20 (only one of which is shown) which are circumferentially distributed around the geometric axis of the intermediate drum 18, being enclosed by an elastic annular band 21 defining a continuous rest seating for the respective sidewall 10. Sectors 20 are radially movable between a work condition in which, as shown in Figs. 4 and 5, the first radially expandible portions 19 act in thrust relationship with the annular reinforcing structures 5 of the carcass sleeve 3, and a rest condition in which the expandible portions are radially retracted with respect to the annular reinforcing structures 5, as viewed from Figs. 2 and 3, to enable axial insertion and removal of the carcass sleeve 3 from the intermediate drum 18.

Also provided on drum 18 are retention devices, that are neither shown nor described in detail because they can be made in any known manner, intended for holding the leading portion of the sidewall strip during winding up of same on drum 18, before junction of said leading portion with the trailing portion of the strip.

In addition and preferably, associated with each of the first radially expandible portions 19, at an axially inner position, is an auxiliary expandible portion 24. Each auxiliary expandible portion 24 is made up of a plurality of blocks 24a (only one of which is shown) circumscribed by the respective elastic annular band portion 21 and radially movable between a rest condition in which they are substantially in radial alignment with the respective first expandible portion 19 (Figs. 2 to 4), and an operating condition in which they radially project with respect to the first expandible portion (Fig. 5), for the purposes better clarified in the following.

Advantageously associated with the third work station 13 is at least one auxiliary unit 22 upon the action of which positioning of the sidewalls 10 on the intermediate drum 18 is carried out, before engagement of the carcass sleeve 3 on the intermediate drum itself.

This auxiliary unit 22, which is neither shown nor described in detail because it can be made in any convenient manner, essentially comprises feed devices consisting of static or power-driven guide and transport systems 23 (chute-like guide elements or conveyor belts) adapted to guide at least one strip of elastomer material designed to constitute one of the sidewalls 10 along each of the first radially expandible portions 19 arranged in a rest condition. In more detail, the strip can be picked up for example from a feed reel or other continuous delivery or building device and guided towards a respective application region positioned tangentially of the intermediate drum 18, while said drum is being driven in rotation around its own axis in a full revolution to produce the circumferential distribution of the strip itself. Appropriate cutting means can be associated with the auxiliary unit 22 to cut each strip to a length corresponding to the circumferential extension of the intermediate drum 18 in the application region, immediately before or after the above-described step involving positioning of sidewalls 10.

Said auxiliary unit 22 can be provided with controls for start and operation of said retention devices holding the leading portion of the strip on the drum.

When the above operation has been completed, as shown in Fig. 2, the sidewalls 10 are each shaped in the form of an annular band having a cross-section outline axially extending from the intermediate drum 18, and they have the respective inner end flaps 10a facing each other and mutually spaced apart of an amount substantially depending on the distance between the centres of the annular reinforcing structures 5 of the carcass sleeve 3, each flap having an end section thereof in superposed relationship with one of the auxiliary expandible portions 24 set in a rest condition.

Under this circumstance, the intermediate drum 18 lends itself to receive in engagement the carcass sleeve 3 that, through the first transferring member 17, is coaxially fitted on the drum itself, with the annular reinforcing structures 5 that are each located at the inner end flap 10a of one of the sidewalls 10.

Pusher elements 25 may be advantageously associated with the intermediate drum 18 to cause a centring and axial tensioning action of the carcass sleeve 3 so as to ensure a correct positioning of the annular reinforcing structures 5 simultaneously with the step of engaging the sleeve itself on the intermediate drum 18.

In more detail, it is provided that a series of circumferentially distributed pusher elements 25, only one of which is shown in the figures, should be associated with each of the halves 18a, 18b of the intermediate drum 18. The pusher elements 25 are axially movable between a rest position, in which they are located at an axially inner position with respect to the auxiliary expandible portions 24 and, as a result, with respect to the inner end flaps 10a of the respective sidewalls 10 positioned on the intermediate drum 18, and an operating position in which they are radially superposed with respect to the inner end flaps themselves. The pusher elements 25 may be also provided to be radially movable between a contracted condition in which, as shown in Fig. 2, they enable axial fitting of sleeve 3 on the intermediate drum 18, and a use condition in which, as shown in Figs. 3 and 4, they act against the inner cylindrical surface of the carcass sleeve.

Said axial and radial movements may be also provided to be made simultaneously with a single rotatory motion.

After the carcass sleeve 3 has been coaxially fitted on the intermediate drum 18, the pusher elements 25 are simultaneously brought to the use condition and subsequently moved from the rest position to the operating position. In the operating position, as shown in Fig. 3, the pusher elements 25 act in thrust relationship with inner shoulders 5a defined by the annular reinforcing structures 5, so as to produce the desired centring and axial tensioning of the carcass sleeve 3.

Then, radial translation of sectors 20 is accomplished in any manner convenient for a person skilled in the art, to bring the first radially expandible portions 19 to the operating condition and consequently give rise, as can be understood from a comparison between figures 3 and 4, to a radial expansion of the sidewalls 10. Thus, as viewed from Fig. 4, application of the inner end flap 10a of each sidewall 10 against the annular reinforcing structure 5 is obtained, at a radially inner position with respect to the tyre 2 bead, thereby ensuring steadiness in the mutual positioning between the sidewalls 10 and the remaining parts of the tyre during the subsequent process steps.

After moving the pusher elements 25 axially away from the axially inner shoulders 5a of the annular reinforcing structures 5, intervention of the radial blocks 24a is operated to bring the auxiliary expandible portions 24 to the operating condition, so that an additional radial expansion is imposed to the end section of the inner end flap 10a of each sidewall 10. As viewed from Fig. 5, under this operating condition each of the auxiliary expandible portions 24 has an axially outer surface thereof 24b in abutment relationship with the axially inner shoulder 5a defined by the respective annular reinforcing portion 5, thereby giving rise to application of the end section of the end flap 10a against the shoulder itself.

In order to make application of the inner end flaps 10a to the annular reinforcing portions 5 steadier, each of the radially expandible portions 19 and/or the elastic annular band 21 associated therewith may be advantageously such shaped as to define a diametrical shoulder capable of giving rise to application of the end flap 10a laterally against the annular reinforcing portion 5, on the opposite side from the axially inner shoulder 5a.

A perfect adhesion between the parts can be further promoted by an elastic static element, or an inflatable element which better adapts itself to the carcass sleeve shape.

Alternatively, a possible rolling action may be provided for the purpose of pressing the annular reinforcing structures 5 against the end flaps 10a. When application has been completed, the elastomer material forming the inner flap 10a of each sidewall 10 offers an additional protection to the tyre 2 bead, which is advantageous in terms of functional features of the tyre under use conditions.

The carcass sleeve 3 is then engaged by a possible second transferring member 26 that, upon shrinkage of the first expandible portions 19 and the auxiliary expandible portions 24 to the rest condition, removes it from the intermediate drum 18 and transfers it to a shaping drum 27 on which the process for accomplishing the tyre will be completed.

Before or after execution of the previously described steps, building of the belting structure 8 provided with a respective tread band 9 is carried out in the second work station 12. This working too may be accomplished in any convenient manner, for instance by winding up one or more sequentially-superposed belt layers on an auxiliary drum 28 (Fig. 1), of the so-called "comb" type for example, which is provided with radially expandible sectors. Once formation of the belting structure 8 has been completed, application of the tread band 9 occurs, so as to form a composite outer sleeve 29 of cylindrical conformation which is then removed from the auxiliary drum 28 to be transferred, by a third transferring member 30 operating on the transfer line 15 for example, to the fourth work station 14 and fitted at a centred position on the carcass sleeve 3 previously engaged on the shaping drum 27.

If preferred, the functions of the second transferring member 26 can be accomplished by the above-described first transferring member 17 and/or the third transferring member 30.

The shaping drum 27 is made up of two coaxially-aligned halves 27a, 27b which are axially movable with respect to each other, in each of which a main grasping portion 31 and a possible axially-internal auxiliary grasping portion 32 are defined, said portions being expandible to engage the carcass sleeve 3 at the annular reinforcing structures 5 at the beads, in the same manner as described with reference to the intermediate drum 18. Alternatively, the auxiliary grasping portion 32 may be made like the above illustrated pusher element 25.

Intervention of the main 31 and auxiliary 32 grasping portions can be preceded by an action exerted by possible auxiliary pusher elements (not shown) arranged to cause centring and axial tensioning of the carcass sleeve 3 in the same manner as previously described with reference to the pusher elements 25 associated with the intermediate drum 18.

The third transferring member 30 brings the outer sleeve 29 to a centred position with respect to the carcass sleeve 3 engaged on the shaping drum 27, with the sidewalls 10 still axially projecting from the annular reinforcing structures 5 and lying on applicator devices 33 consisting, of expandible-diaphragm elements or inflatable bags externally covering the main 31 and auxiliary 32 grasping portions, instead of the elastic annular band 21 described with reference to the intermediate drum 18.

Concurrently with the above operation, mutual axial approaching of halves 27a, 27b forming the shaping drum 27 is produced and simultaneously a working fluid is blown in within the carcass sleeve 3, so as to give it a toroidal conformation. During this step, the carcass sleeve 3 is submitted to a radial expansion bringing it close to the inner surface of the outer sleeve 19 until coupling between the carcass sleeve 3 and outer sleeve 19 takes place, as shown in Figs. 8 and 9.

At the end of this operation a rolling step of the tread band 9 may be provided, preferably starting from a meridian plane of tyre 2 towards the opposite side edges 9a of the tread band itself, to ensure a correct adhesion of the outer sleeve 19 against the carcass ply 4, as well as possible folding of the side edges against the carcass structure 3.

Concurrently with the shaping step, intervention of the inflatable bags 33 or equivalent applicator devices associated with the shaping drum 27 is operated to cause application of each sidewall 10 against a corresponding one of the side surfaces 3a of the carcass sleeve 3, extending, just as an indication, between the annular reinforcing structure 5 and the side edge 9a of the tread band 9.

Each inflatable bag 33 lends itself to be deformed, by introduction of a working fluid under pressure, between a rest condition in which, as shown in Figs. 6 and 7, it substantially has a cylindrical conformation flattened against the outer surface of the shaping drum 27, and an expansion condition in which it takes a substantially toroidal conformation. When bags 33 are inflated, the sidewalls 10 are turned up around the annular reinforcing structures 5 and moved close to the side surfaces 3a of the carcass structure 3, until they are brought into thrust relationship with the side surfaces themselves, possibly with the aid of intermediate rolling operations directly carried out on the sidewalls 10 to improve correct application of same, or of auxiliary thrust elements 34 giving rise to an axial thrust action on the inflatable bags 33.

Preferably, the width of the strips intended for formation of the sidewalls 10 is conveniently selected so that, when application has been completed, each sidewall 10 has the respective outer end flap 10b laterally superposed with respect to the side edge of the tread band 9.

As an alternative to the previously described operating sequence, aiming at obtaining a construction pattern of the "overlying sidewall" type, application of the sidewalls 10 against the side surfaces 3a of the carcass sleeve 3 may be provided to be completed before terminating the shaping step with consequent application of the carcass ply 4 against the outer sleeve 29. In this case, the side edges 9a of the tread band 9 will be superposed at the outer end flaps 10b of the sidewalls 10, according to a configuration of the so-called "underlying sidewall" type.

Bags 33 are subsequently deflated and brought back to the rest position, the grasping portions 31, 32 of the shaping drum 27 being afterwards brought back too to the rest position to allow removal of the buildingd tyre 2, after optionally carrying out a rolling action on the sidewalls 10 to consolidate adhesion thereof to the side surfaces 3a of the carcass structure 3.

The present invention achieves important advantages.

It should be in fact recognized that distribution of the operating steps for building of the tyre on three drums instead of two drums as usually provided in the two-step production processes, gives rise to an important reduction in the floor to floor time on the individual drums, which is advantageous for productivity.

An optimal balancing of the floor to floor times in the individual work stations is also achieved, with an important reduction in downtime.

Each of the building, intermediate and shaping drums intended for carrying out a specific operation in the tyre manufacturing process, is greatly simplified as compared with the drums that in known technical solutions were designed to execute several operating steps. This aspect gives rise to an unexpected reduction in the plant manufacturing costs, as well as to an important increase in the operating reliability and to a simplification of the servicing operations.
In addition and above all, the structural simplification of the individual drums offers the possibility of reducing the structural sizes of same so as to adapt them to the production of tyres of small sizes. This too is an important advantage because in the greatly-automated present processes use of machinery capable of producing tyres with a rim-fitting diameter smaller, just as an indication, than fifteen inches is particularly complicated.

## Claims

1. A method of manufacturing a tyre for vehicle wheels, comprising the steps of: - winding at least one carcass ply (4) around a cylindrical building drum (16); - axially fitting a pair of annular reinforcing structures at the beads (5) respectively around opposite end flaps (4a) of said carcass ply (4), and - turning up said end flaps (4a) each around the respective annular reinforcing structures at the beads (5), so that
a carcass sleeve (3) comprising said annular reinforcing structures at the beads (5) axially spaced apart from each other, and at least one carcass ply (4) having opposite end flaps (4a) is formed
- transferring the carcass sleeve (3) onto a shaping drum (27) ;
- shaping the carcass sleeve (3) into a toroidal configuration to apply it to a belting structure (8) at a radially inner position thereof and to a tread band (9) circumscribing said belting structure;
- applying a pair of sidewalls (10) against side surfaces (3a) of the carcass sleeve (3), each of said pair of sidewalls extending radially between one of the annular reinforcing structures (5) and a side edge of the tread band (9),
wherein before transferring the carcass sleeve (3) to the shaping drum (27), the following steps are carried out:
- positioning said sidewalls (10) on an intermediate drum (18), which sidewalls have respective inner end flaps (10b) facing each other and mutually spaced apart;
- transferring the carcass sleeve (3) onto the intermediate drum;
- engaging the inner end flap (10a) of each sidewall (10) against said carcass sleeve (3) at one of the annular reinforcing structures at the beads (5), **characterized in that** said shaping step is achieved after the turning-up step, and each of said winding, axially fitting and turning-up step is achieved on the building drum (16), so that said carcass sleeve (3) is formed on the building drum (16) with said carcass ply (4) having the opposite end flaps (4a) each turned up at one of said annular reinforcing structures (5) ;

2. A method as claimed in claim 1, wherein positioning of each sidewall (10) comprises the step of winding up a strip of elastomer material around a first radially expandible portion (19) of the intermediate drum (18).

3. A method as claimed in claim 2, wherein following said transferring step, the carcass sleeve (3) is coaxially positioned around the intermediate drum (18) with the annular reinforcing structures at the beads (5) that are each disposed close to the inner end flap (10a) of one of said sidewalls (10).

4. A method as claimed in claim 3, wherein the engagement step of the inner end flap (10a) of each sidewall (10) is carried out by radial expansion of the sidewalls (10) placed on the intermediate drum (18).

5. A method as claimed in claim 4, wherein following radial expansion of the sidewalls (18), an end section of the inner end flap (10a) of each sidewall (10) is submitted to an additional radial expansion step and applied against an axially inner shoulder (5a) defined by the respective annular reinforcing portion at the bead (5).

6. A method as claimed in claim 5, wherein said additional radial expansion is carried out subsequently to said steps of shaping the carcass sleeve (3) and applying said pair of sidewalls (10).

7. A method as claimed in claim 4, wherein before or during radial expansion of the sidewalls (10), an axial tensioning step of the carcass sleeve (3) is carried out.

8. A method as claimed in claim 7, wherein axial tensioning of the carcass sleeve (3) is accomplished by bringing pusher elements (25) in thrust relationship with axially inner shoulders (5a) defined by the annular reinforcing portions at the beads (5).

9. A method as claimed in claims 5 and 8, wherein the pusher elements (25) are caused to be axially moved apart from said axially inner shoulders (5a) before carrying out the additional radial expansion of the end sections of said inner end flaps (10a).

10. A method as claimed in claim 1, further comprising the steps of:
- forming an outer sleeve (29) comprising the belting structure (8) and the tread band (9) applied to the belting structure (8) at a radially outer position thereof;
- placing the outer sleeve (29) at a centred position around the carcass sleeve (3) previously transferred onto the shaping drum (27), before terminating the shaping step.

11. A method as claimed in claim 1, wherein application of the sidewalls (10) against the side surface (3a) of the carcass sleeve (3) is carried out before completing the shaping step.

12. An apparatus for manufacturing tyres for vehicle wheels, comprising:
- a building drum (16) to form a carcass sleeve (3) comprising a pair of annular reinforcing structures at the beads (5) axially spaced apart from each other, and at least one carcass ply (4) having opposite end flaps (4a) turning-up means for turning up the end flaps (4a) of the carcass ply (4), each around the respective annular reinforcing structures at the beads (5);
- shaping drum (27) to form a tyre (2) comprising said carcass sleeve (3), a belting structure (8) paired with a radially external tread band (9), and a pair of sidewalls (10) applied against respective side surfaces (3a) of the carcass sleeve (3), each of them extending between one of said annular reinforcing structures at the beads (5) and a side edge (9a) of the tread band (9), applicator devices (33) being associated with the shaping drum (27) to apply each sidewall (10) to the respective side surface (3a) of the carcass sleeve (3);
- transfer devices (15) for moving the carcass sleeve (3) from the building (16) drum to the shaping drum (27),
- an intermediate drum (18) arranged for engagement of the carcass sleeve (3) carried by said transfer devices (15);
- an auxiliary unit (22) to position said sidewalls (10) on the intermediate drum (18), said sidewalls (10) having respective inner end flaps (10a) facing each other and mutually spaced apart;
- said intermediate drum (18) comprising engagement devices (19, 24) to cause engagement of the inner end flap (10a) of each sidewall (10) against said carcass sleeve (3), at one of the annular reinforcing structures at the beads (5), **characterized in that** said turning-up means acts on the carcass ply (4) wound on the building drum (16), so that said carcass sleeve (3) is formed on the building drum (16) with said carcass ply (4) having the opposite end flaps (4a) each turned up at one of said annular reinforcing structures (5) ;

13. An apparatus as claimed in claim 12, wherein said engagement devices comprise first radially expandible portions (19) of the intermediate drum (18).

14. An apparatus as claimed in claim 13, wherein said first radially expandible portions (19) define respective rest seatings for the sidewalls (10) positioned on the intermediate drum (18).

15. An apparatus as claimed in claim 13, wherein said engagement devices further comprise auxiliary expandible portions (24) located at axially inner positions with respect to the first radially expandible portions (19) and movable between a rest condition in which they are substantially in radial alignment with the first expandible portions themselves, and an operating condition in which they radially project from the first radially expandible portions (19).

16. An apparatus as claimed in claim 15, wherein each of said auxiliary radially expandible portions (24) offers a rest seating for the inner end flap (10a) of one of said sidewalls (10).

17. An apparatus as claimed in claim 15, wherein, in the operating condition, each of said auxiliary radially expandible portions (24) has one axially outer surface (24b) thereof in abutment relationship with an axially inner shoulder (5a) defined by one of said annular reinforcing portions at the bead (5), to apply the inner end flap (10a) of the respective sidewall (10) against the shoulder itself.

18. An apparatus as claimed in claim 12, wherein said intermediate drum (18) further comprises pusher elements (25) axially movable between a rest position which is axially internal with respect to the inner end flaps (10a) of the sidewalls (10) disposed on the intermediate drum (18), and an operating position in which said pusher elements are radially superposed with respect to the inner end flaps (10a) of the sidewalls (10).

19. An apparatus as claimed in claim 18, wherein said pusher elements (25) in the operating position act against axially inner shoulders (5a) defined by said annular reinforcing portions at the bead (5), to give rise to an axial tensioning of the carcass sleeve (3) engaged on the intermediate drum (18).

20. An apparatus as claimed in claim 12, wherein said applicator devices comprise radially expandible diaphragm elements (33) arranged to supply rest seatings for the sidewalls (10) carried by the carcass sleeve (3) transferred to the shaping drum (27).

21. An apparatus as claimed in claim 12, wherein said transfer devices (15) comprise a first transferring member (17) to move the carcass sleeve (3) from the building drum (16) to the intermediate drum (18), and a second transferring member (26) to move the carcass sleeve (3) together with the sidewalls (10) associated therewith from the intermediate drum (18) to the shaping drum (27).

## Patentansprüche

1. Verfahren zur Herstellung eines Reifens für Fahrzeugräder, wobei das Verfahren die Schritte aufweist:
- Herumlegen wenigstens einer Karkassenlage (4) um eine zylindrische Bautrommel (16),
- axiales Anpassen eines Paars von ringförmigen Verstärkungsaufbauten an den Wulsten (5) jeweils um gegenüberliegende Endlaschen (4a) der Karkassenlage (4) herum,
- nach oben Schlagen jeder der Endlaschen (4a) um die entsprechenden ringförmigen Verstärkungsaufbauten an den Wulsten (5), so dass eine Karkassenhülse (3) mit den axial voneinander beabstandeten ringförmigen Verstärkungsaufbauten an den Wulsten (5) und wenigstens einer Karkassenlage (4) mit gegenüberliegenden Endlaschen (4a) gebildet wird,
- Überführen der Karkassenhülse (3) auf eine Formtrommel (27),
- Geben der Karkassenhülse (3) die Form einer torusförmigen Gestalt für ihr Anbringen an einem Gurtaufbau (8) an einer radial inneren Position von ihm und an einem Laufflächenband (9), das den Gurtaufbau umgibt,
- Anbringen eines Paars von Seitenwänden (10) an den Seitenflächen (3a) der Karkassenhülse (3), wobei sich jede Seitenwand des Paars radial zwischen einem der Verstärkungsaufbauten (5) und einem Seitenrand des Laufflächenbandes (9) erstreckt,
- wobei vor dem Überführen der Karkassenhülse (3) zu der Formtrommel (27) die folgenden Schritte ausgeführt werden:
-- Anordnen der Seitenwände (10) an einer Zwischentrommel (18), wobei die Seitenwände jeweils innere Endlaschen (10b) haben, die einander zugewandt und voneinander beabstandet sind,
-- Überführen der Karkassenhülse (3) auf die Zwischentrommel und
-- Ineingriffbringen der inneren Endlasche (10a) jeder Seitenwand (10) mit der Karkassenhülse (3) an einem der ringförmigen Verstärkungsaufbauten der Wulste (5),
**dadurch gekennzeichnet,**
- **dass** der Schritt des Formgeben nach dem nach oben Umschlagschritt ausgeführt wird und
- **dass** jeder Schritt des Herumlegens, des axial Anpassens und des nach oben Umschlagens auf die Bautrommel (16) so ausgeführt wird, dass die Karkassenhülse (3) auf der Bautrommel (16) ausgebildet wird, wobei jede der gegenüberliegenden Endlaschen (4a) der Karkassenlage (4) nach oben auf einen der ringförmigen Verstärkungsaufbauten (5) umgeschlagen wird.

2. Verfahren nach Anspruch 1, bei welchem das Anordnen jeder Seitenwand (10) den Schritt aufweist, einen Streifen aus elastomeren Material um einen ersten radial expandierbaren Abschnitt (19) der Zwischentrommel (18) aufzuwickeln.

3. Verfahren nach Anspruch 2, bei welchem nach dem Überführungsschritt die Karkassenhülse (3) koaxial um die Zwischentrommel (18) herum mit den ringförmigen Verstärkungsaufbauten an den Wulsten (5) angeordnet wird, von denen jeder nahe bei der inneren Endlasche (10a) einer der Seitenwände (10) angeordnet ist.

4. Verfahren nach Anspruch 3, bei welchem der Schritt des Ineingriffbringens der inneren Endlasche (10a) jeder Seitenwand (10) durch eine radiale Expansion der Seitenwände (10) ausgeführt wird, die auf der Zwischentrommel (18) angeordnet sind.

5. Verfahren nach Anspruch 4, bei welchem nach der radialen Expansion der Seitenwände (18) ein Endabschnitt der inneren Endlasche (10a) jeder Seitenwand (10) einem zusätzlichen radialen Expansionsschritt unterworfen und an einer axial inneren Schulter (5a) angelegt wird, die von dem jeweiligen ringförmigen Verstärkungsteil an dem Wulst (5) gebildet wird.

6. Verfahren nach Anspruch 5, bei welchem die zusätzliche radiale Expansion nach den Schritten des Formgebens der Karkassenhülse (3) und des Anbringens des Paars von Seitenwänden (10) ausgeführt wird.

7. Verfahren nach Anspruch 4, bei welchem vor oder während der radialen Expansion der Seitenwände (10) ein Schritt eines axialen Ziehens der Karkassenhülse (3) ausgeführt wird.

8. Verfahren nach Anspruch 7, bei welchem das axiale Ziehen der Karkassenhülse (3) **dadurch** erreicht wird, dass Drückelemente (25) in eine Druckbeziehung zu axial inneren Schultern (5a) gebracht werden, die von ringförmigen Verstärkungsteilen an den Wulsten (5) gebildet werden.

9. Verfahren nach den Ansprüchen 5 und 8, bei welchem die Drückelemente (25) dazu gebracht werden, sich axial von den axial inneren Schultern (5a) weg zu bewegen, bevor die zusätzliche radiale Expansion der Endabschnitte der inneren Endlaschen (10a) ausgeführt wird.

10. Verfahren nach Anspruch 1, welches weiterhin die Schritte aufweist:
- Ausbilden einer äußeren Hülse (29), die den Gurtaufbau (8) und das Laufflächenband (9) aufweist, das an dem Gurtaufbau (8) an einer radial äußeren Position von ihm angebracht ist, und
- Anordnen der äußeren Hülse (29) in einer zentrierten Position um die Karkassenhülse (3) herum, die vorher auf die Formtrommel (27) vor der Beendigung des Schritts des Formgebens überführt worden ist.

11. Verfahren nach Anspruch 1, bei welchem das Anbringen der Seitenwände (10) an der Seitenfläche (3a) der Karkassenhülse (3) vor dem Abschluss des Schritts des Formgebens ausgeführt wird.

12. Vorrichtung zur Herstellung von Reifen für Fahrzeugräder
- mit einer Bautrommel (16) zur Bildung einer Karkassenlage (3), die ein Paar von axial voneinander beabstandeten ringförmigen Verstärkungsaufbauten an den Wulsten (5) und wenigstens eine Karkassenlage (4) mit gegenüberliegenden Endlaschen (4a aufweist,
- mit einer nach oben Umschlageinrichtung zum Umschlagen der Endlaschen (4a) der Karkassenlage (4) nach oben jeweils um die entsprechenden ringförmigen Verstärkungsaufbauten an den Wulsten (5),
- mit einer Formtrommel (27) zur Ausbildung eines Reifens (2), der eine Karkassenhülse (3), einen Gurtaufbau (8) gepaart mit einem radial äußeren Laufflächenband (9) und ein Paar von Seitenwänden (10) aufweist, die an jeweiligen Seitenflächen (3a) der Karkassenhülse (3) angelegt sind, wobei sich jede von ihnen zwischen einem der ringförmigen Verstärkungsaufbauten an den Wulsten (5) und einem Seitenrand (9a) des Laufflächenbandes (9) erstreckt und der Formtrommel (27) Applikatoreinrichtungen (33) zum Anbringen jeder Seitenwand (10) an der jeweiligen Seitenfläche (3a) der Karkassenhülse (3) zugeordnet sind,
- mit Überführungseinrichtungen zum Bewegen der Karkassenhülse (3) von der Bautrommel (6) zu der Formtrommel (27),
- mit einer Zwischentrommel (18), die für einen Eingriff mit der von den Überführungsvorrichtungen (15) getragenen Karkassenhülse (3) angeordnet ist,
- mit einer Zusatzeinheit (22) zum Positionieren der Seitenwände (10) auf der Zwischentrommel (18), wobei die jeweiligen inneren Endlaschen (10a) der Seitenwände (10) einander zugewandt und voneinander beabstandet sind,
- wobei die Zwischentrommel (18) Eingriffsvorrichtungen (19, 24) zum Herbeiführen eines Eingriffs der inneren Endlaschen (10a) jeder Seitenwand (10) mit der Karkassenhülse (3) an einer der ringförmigen Verstärkungsaufbauten an den Wulsten (5) aufweist,
**dadurch gekennzeichnet,**
- **dass** die nach oben Umschlageinrichtung auf die auf die Bautrommel (16) gewickelte Karkassenlage (4) so wirkt, dass die Karkassenhülse (3) auf der Bautrommel (16) ausgebildet wird und die gegenüberliegenden Endlaschen (4a) der Karkassenlagen (4) jeweils an einem der ringförmigen Verstärkungsaufbauten (5) nach oben umgeschlagen werden.

13. Vorrichtung nach Anspruch 12, bei welcher die Eingriffsvorrichtungen erste radial expandierbare Abschnitte (19) der Zwischentrommel (18) aufweisen.

14. Vorrichtung nach Anspruch 13, bei welcher die ersten radial expandierbaren Abschnitte (19) jeweils Anliegesitze für die Seitenwände (10) bilden, die an der Zwischentrommel (18) angeordnet sind.

15. Vorrichtung nach Anspruch 13, bei welcher die Eingriffsvorrichtungen weiterhin zusätzliche expandierbare Abschnitte (19) aufweisen, die an axial inneren Positionen bezüglich der ersten radial expandierbaren Abschnitte (19) angeordnet und zwischen einem Ruhezustand, in welchem sie im Wesentlichen in radialer Ausrichtung zu den ersten expandierbaren Abschnitten stehen, und einem Betriebszustand bewegbar sind, in dem sie radial von den ersten radial expandierbaren Abschnitten (19) vorstehen.

16. Vorrichtung nach Anspruch 15, bei welcher jeder der zusätzlichen radial expandierbaren Abschnitte (24) einen Anliegesitz für die innere Endlasche (10a) einer der Seitenwände (10) anbietet.

17. Vorrichtung nach Anspruch 15, bei welcher im Betriebszustand jeder der zusätzlichen radial expandierbaren Abschnitte (24) eine axial äußere Fläche (24b) hat, die in einer Anschlagbeziehung in einer axial inneren Schulter (5a) steht, die von einem der ringförmigen Verstärkungsabschnitten an dem Wulst (5) gebildet wird, um die innere Endlasche (10a) der jeweiligen Seitenwand (10) an der Schulter anzulegen.

18. Vorrichtung nach Anspruch 12, bei welcher die Zwischentrommel (18) weiterhin Drückelemente (25) aufweist, die zwischen einer Ruhestellung, die bezogen auf die inneren Endlaschen (10a) der an der Zwischentrommel (18) angeordneten Seitenwände (10) und einer Betriebsstellung axial bewegbar sind, in der die Drückelemente bezüglich der inneren Endlaschen (10a) der Seitenwände (10) radial aufeinander gelegt sind.

19. Vorrichtung nach Anspruch 18, bei welcher die Drückelemente (25) in der Betriebsstellung gegen die axial inneren Schultern (5a) wirken, die von den ringförmigen Verstärkungsabschnitten an dem Wulst (5) gebildet werden, um eine axiale Zugspannung der an der Zwischentrommel (18) angreifenden Karkassenhülse (3) herbeizuführen.

20. Vorrichtung nach Anspruch 12, bei welcher die Applikatorvorrichtungen radial expandierbare Membranelemente (33) aufweisen, die so angeordnet sind, dass Anliegesitze für die Seitenwände (10) bereitgestellt werden, die von der Karkassenhülse (3) getragen werden, die zur Formtrommel (27) überführt ist.

21. Vorrichtung nach Anspruch 12, bei welcher die Überführungsvorrichtungen (15) ein erstes Überführungselement (17) zum Bewegen der Karkassenhülse (3) von der Bautrommel (16) zur Zwischentrommel (18) und ein zweites Überführungselement (26) zum Bewegen der Karkassenhülse (3) zusammen mit den ihr zugeordneten Seitenwänden (10) von der Zwischentrommel (10) zur Formtrommel (27) aufweisen.

## Revendications

1. Procédé de fabrication d'un pneu pour roues de véhicules, comprenant les étapes consistant à :
- enrouler au moins une nappe de carcasse (4) autour d'un tambour d'assemblage cylindrique (16) ;
- monter axialement une paire de structures de renforcement annulaires sur les talons (5) respectivement autour de rebords d'extrémité opposés (4a) de ladite nappe de carcasse (4), et
- replier vers le haut lesdits rebords d'extrémité (4a) chacun autour des structures de renforcement annulaires respectives au niveau des talons (5), de sorte qu'un manchon de carcasse (3) comprenant lesdites structures de renforcement annulaires au niveau des talons (5) espacées axialement l'une de l'autre, et au moins une nappe de carcasse (4) ayant des rebords d'extrémité opposés (4a) est formé ;
- transférer le manchon de carcasse (3) sur un tambour de galbage (27) ;
- donner au manchon de carcasse (3) une configuration toroïdale pour l'appliquer sur une structure de ceinture (8) en une position radialement intérieure de celle-ci et sur une bande de roulement (9) qui circonscrit ladite structure de ceinture ;
- appliquer une paire de flancs (10) contre les surfaces latérales (3a) du manchon de carcasse (3), chacun desdits flancs s'étendant radialement entre l'une des structures de renforcement annulaires (5) et un bord latéral de la bande de roulement (9),
dans lequel, avant de transférer le manchon de carcasse (3) sur le tambour de galbage (27), les étapes suivantes sont exécutées :
- positionnement desdits flancs (10) sur un tambour intermédiaire (18), lesquels flancs ont des rebords d'extrémité intérieurs respectifs (10b) qui se font face et qui sont mutuellement espacés ;
- transfert du manchon de carcasse (3) sur le tambour intermédiaire ;
- mise en place du rebord d'extrémité intérieur (10a) de chaque flanc (10) contre ledit manchon de carcasse (3) sur l'une des structures de renforcement annulaires au niveau des talons (5),
**caractérisé en ce que**
ladite étape de mise en forme est réalisée après l'étape de pliage vers le haut, et
chacune desdites étapes d'enroulement, de montage axial et de pliage vers le haut est réalisée sur le tambour d'assemblage (16), de sorte que ledit manchon de carcasse (3) est formé sur le tambour d'assemblage (16) avec les rebords d'extrémité opposés (4a) de ladite nappe de carcasse (4) tournés chacun vers le haut au niveau de l'une desdites structures de renforcement annulaires (5).

2. Procédé selon la revendication 1, dans lequel le positionnement de chaque flanc (10) comprend l'étape consistant à enrouler une bande de matériau élastomère autour d'une première partie extensible radialement (19) du tambour intermédiaire (18).

3. Procédé selon la revendication 2, dans lequel, suite à ladite étape de transfert, le manchon de carcasse (3) est positionné coaxialement autour du tambour intermédiaire (18) avec les structures de renforcement annulaires au niveau des talons (5) qui sont disposées chacune près du rebord d'extrémité intérieur (10a) de l'un desdits flancs (10).

4. Procédé selon la revendication 3, dans lequel l'étape de mise en place du rebord d'extrémité intérieur (10a) de chaque flanc (10) est exécutée par expansion radiale des flancs (10) placés sur le tambour intermédiaire (18).

5. Procédé selon la revendication 4, dans lequel, suite à l'expansion radiale des flancs (18), une section d'extrémité du rebord d'extrémité intérieur (10a) de chaque flanc (10) est soumise à une étape d'expansion radiale supplémentaire et appliquée contre un épaulement axialement intérieur (5a) défini par la partie de renforcement annulaire respective au niveau du talon (5).

6. Procédé selon la revendication 5, dans lequel ladite expansion radiale supplémentaire est exécutée à la suite desdites étapes de mise en forme du manchon de carcasse (3) et d'application de ladite paire de flancs (10).

7. Procédé selon la revendication 4, dans lequel, avant ou pendant l'expansion radiale des flancs (10), une étape de mise en tension axiale du manchon de carcasse (3) est exécutée.

8. Procédé selon la revendication 7, dans lequel la mise en tension axiale du manchon de carcasse (3) est accomplie en mettant des éléments pousseurs (25) en relation de poussée avec des épaulements axialement intérieurs (5a) définis par les parties de renforcement annulaires au niveau des talons (5).

9. Procédé selon les revendications 5 et 8, dans lequel les éléments pousseurs (25) sont séparés axialement desdits épaulements axialement intérieurs (5a) avant l'exécution de l'expansion radiale supplémentaire des sections d'extrémité desdits rebords d'extrémité intérieurs (10a).

10. Procédé selon la revendication 1, comprenant en outre les étapes consistant à :
- former un manchon extérieur (29) comprenant la structure de ceinture (8) et la bande de roulement (9) appliquée à la structure de ceinture (8) en une position radialement extérieure de celle-ci ;
- placer le manchon extérieur (29) en une position centrée autour du manchon de carcasse (3) préalablement transféré sur le tambour de galbage (27), avant de terminer l'étape de mise en forme.

11. Procédé selon la revendication 1, dans lequel l'application des flancs ( 10) contre la surface latérale (3a) du manchon de carcasse (3) est exécutée avant l'achèvement de l'étape de mise en forme.

12. Dispositif pour fabriquer des pneus pour roues de véhicules, comprenant :
- un tambour d'assemblage (16) pour former un manchon de carcasse (3) comprenant une paire de structures de renforcement annulaires sur les talons (5) axialement espacées l'une de l'autre, et au moins une nappe de carcasse (4) ayant des rebords d'extrémité opposés (4a) ;
- un moyen de pliage pour tourner vers le haut les rebords d'extrémité (4a) de la nappe de carcasse (4) chacun autour des structures de renforcement annulaires au niveau des talons (5) ;
- un tambour de galbage (27) pour former un pneu (2) comprenant ledit manchon de carcasse (3), une structure de ceinture (8) appariée avec une bande de roulement radialement extérieure (9), et une paire de flancs (10) appliqués contre des surfaces latérales respectives (3a) du manchon de carcasse (3), chacun d'entre eux s'étendant entre l'une desdites structures de renforcement annulaires au niveau des talons (5) et un bord latéral (9a) de la bande de roulement (9), des dispositifs applicateurs (33) étant associés au tambour de galbage (27) pour appliquer chaque flanc (10) sur la surface latérale respective (3a) du manchon de carcasse (3) ;
- des dispositifs de transfert (15) pour faire passer le manchon de carcasse (3) du tambour d'assemblage (16) au tambour de galbage (27) ;
- un tambour intermédiaire (18) prévu pour la mise en prise du manchon de carcasse (3) porté par lesdits dispositifs de transfert (15) ;
- une unité auxiliaire (22) pour positionner lesdits flancs (10) sur le tambour intermédiaire (18), lesdits flancs (10) ayant des rebords d'extrémité intérieurs respectifs (10a) qui se font face et qui sont mutuellement espacés ;
- ledit tambour intermédiaire (18) comprenant des dispositifs de mise en place (19, 24) pour provoquer la mise en place du rebord d'extrémité intérieur ( 10a) de chaque flanc ( 10) contre ledit manchon de carcasse (3), sur l'une des structures de renforcement annulaires au niveau des talons (5),
**caractérisé en ce que** ledit moyen de pliage agit sur la nappe de carcasse (4) enroulée sur le tambour d'assemblage (16), de sorte que ledit manchon de carcasse (3) est formé sur le tambour d'assemblage (16) avec les rebords d'extrémité opposés (4a) de ladite nappe de carcasse (4) tournés chacun vers le haut au niveau de l'une desdites structures de renforcement annulaires (5).

13. Dispositif selon la revendication 12, dans lequel lesdits dispositifs de mise en place comprennent des premières parties extensibles radialement (19) du tambour intermédiaire (18).

14. Dispositif selon la revendication 13, dans lequel lesdites premières parties extensibles radialement (19) définissent des assises respectives pour les flancs (10) positionnés sur le tambour intermédiaire (18).

15. Dispositif selon la revendication 13, dans lequel lesdits dispositifs de mise en place comprennent en outre des parties extensibles auxiliaires (24) situées en des positions axialement intérieures par rapport aux premières parties radialement extensibles (19) et mobiles entre un état de repos dans lequel elles sont substantiellement en alignement radial avec les premières parties extensibles elles-mêmes, et un état fonctionnel dans lequel elles font saillie radialement depuis les premières parties radialement extensibles (19).

16. Dispositif selon la revendication 15, dans lequel chacune desdites parties radialement extensibles auxiliaires (24) offre une assise pour le rebord d'extrémité intérieur (10a) de l'un desdits flancs (10).

17. Dispositif selon la revendication 15, dans lequel, dans l'état fonctionnel, chacune desdites parties radialement extensibles auxiliaires (24) a une surface axialement extérieure (24b) en relation d'appui avec un épaulement axialement intérieur (5a) défini par l'une desdites parties de renforcement annulaires au niveau du talon (5), pour appliquer le rebord d'extrémité intérieur (10a) du flanc respectif (10) contre l'épaulement lui-même.

18. Dispositif selon la revendication 12, dans lequel ledit tambour intermédiaire (18) comprend en outre des éléments pousseurs (25) mobiles axialement entre une position de repos qui est axialement intérieure par rapport aux rebords d'extrémité intérieurs (10a) des flancs (10) disposés sur le tambour intermédiaire (18), et une position fonctionnelle dans laquelle lesdits éléments pousseurs sont superposés radialement par rapport aux rebords d'extrémité intérieurs (10a) des flancs (10).

19. Dispositif selon la revendication 18, dans lequel lesdits éléments pousseurs (25), dans la position fonctionnelle, agissent contre des épaulements axialement intérieurs (5a) définis par lesdites parties de renforcement annulaires au niveau du talon (5), pour tendre axialement le manchon de carcasse (3) mis en place sur le tambour intermédiaire (18).

20. Dispositif selon la revendication 12, dans lequel lesdits dispositifs applicateurs comprennent des éléments de type membrane radialement extensibles (33) conçus pour fournir une assise pour les flancs (10) portés par le manchon de carcasse (3) transféré sur le tambour de galbage (27).

21. Dispositif selon la revendication 12, dans lequel lesdits dispositifs de transfert (15) comprennent un premier élément de transfert (17) pour déplacer le manchon de carcasse (3) du tambour d'assemblage (16) au tambour intermédiaire (18), et un deuxième élément de transfert (26) pour déplacer le manchon de carcasse (3) avec les flancs (10) qui lui sont associés du tambour intermédiaire (18) au tambour de galbage (27).
